# EUROPEAN PATENT SPECIFICATION

(11) **EP 3 001 661 B1**
(45) Date of publication and mention of the grant of the patent: **23.12.2020**
(21) Application number: 15186589.6
(22) Date of filing: 24.09.2015
(51) Int. Cl.: H04M 3/51

(54) **INFORMATION ACQUISITION METHOD,DEVICE AND SYSTEM THEREOF**
INFORMATIONSERWERBSVERFAHREN, VORRICHTUNG UND SYSTEM DAFÜR
PROCÉDÉ D'ACQUISITION D'INFORMATIONS, DISPOSITIF ET SYSTÈME ASSOCIÉS

(30) Priority: 26.09.2014 CN 201410505497
(43) Date of publication of application: 30.03.2016
(73) Proprietor: Xiaomi Inc., Beijing 100085 (CN)
(72) Inventor: XU, Ruijun, 100085 Beijing (CN)
(74) Representative: Cabinet Beau de Loménie

(56) References cited:
- US-A1- 2007 160 054
- US-A1- 2010 166 171
- US-B2- 8 045 698

## Description

### TECHNICAL FIELD

The present invention generally relates to the field of calling and answering, and more particularly, to an information acquisition method, device and system thereof.

### BACKGROUND

A telephone agent system is a calling and answering system required for participation of customer service staff. Enterprise users usually adopt a telephone agent system to provide business consulting services, business handling services and return visit and investigation services, etc.

Taking a first example of conducting a user satisfaction survey by using a telephone agent system, after a conversation between a user terminal and customer service staff of the telephone agent system is completed, the telephone agent system sends a text message to the user terminal for conducting a satisfaction survey. After receiving the text message, the user terminal returns a satisfaction survey result in the form of text message and in the required format of the satisfaction survey text message. For example, the user replies the word "satisfied" or "dissatisfied". After receiving the satisfaction survey result returned by the user terminal in the form of text message, the telephone agent system extracts user satisfaction from the text message.

According to a second example, when the conversation between the user terminal and the customer service staff is completed, the telephone agent system may play a voice prompt inviting the user to give a judgment for the quality of service by pressing a terminal's key (e.g. "1') if the user is satisfied or another key (e.g. "2") otherwise.

At least the following disadvantages are found in related technologies:
The telephone agent system may acquire a user satisfaction survey result through a text message, as in the first example described above. However, this method needs a lot of user input operations and it is unable to obtain a satisfaction survey result from a user terminal in case of a format input error of a text message. In the second example, the user must listen to the whole voice prompt to know which key he/she has to press in case of dissatisfaction. Both processes are thus quite inefficient in terms information acquisition, i.e. they either require a lot of user's operations or are time consuming.

Document US 2007/160054 A1dated 12 July 2007 discloses a method for receiving feedback at a call centre, the method including initiating a first communication between a caller and an agent handling the call, and initiating a second communication session with the caller.

Document US 2010/166171 A1 dated 1 July 2010 discloses methods, systems and computer program products for a customer satisfactory engine.

### SUMMARY

In order to solve the problem of related prior art technologies which are inefficient in terms of information acquisition, embodiments of the present invention provide an information acquisition method, device and system thereof. The present invention is defined in the appended set of claims.

According to the first aspect of the embodiments of the present invention, an information acquisition method is provided, according to claim 1, a user terminal is provided according to claim 5 and a computer program is provided according to claim 6.

Preferred embodiments are provided according to dependent claims 2-4.

The technical solution according to the embodiments of the present invention may have the following beneficial effects:
The present invention is implemented by acquiring an information acquisition page through a data channel established with a telephone agent system and making a satisfaction survey by means of the information acquisition page; thus solving the problem of related technologies in which more user input operations are required for making a satisfaction survey by means of a text message and which is unable to obtain a satisfaction survey result from a user terminal in case of a format input error of the text message thus the whole process being inefficient in terms of information acquisition; and achieving the effect that the telephone agent system may acquire feedback information as long as a user performs a simple operation on the information acquisition page.

It is to be understood that both the foregoing general description and the following detailed description are exemplary and explanatory only and are not restrictive of the invention. The scope of protection is defined by the appended claims.

### BRIEF DESCRIPTION OF THE DRAWINGS

The accompanying drawings, which are incorporated in and constitute a part of this specification, illustrate exemplary embodiments that serve to understand the invention.
Fig. 1A and Fig. 1B are schematic diagrams illustrating two implementation environments of an information acquisition method according to an exemplary embodiment.
Fig. 2 is a flowchart illustrating an information acquisition method according to an exemplary embodiment.
Fig. 3 is a flowchart illustrating an information acquisition method according to another exemplary embodiment.
Fig. 4A is a flowchart illustrating an information acquisition method according to another exemplary embodiment.
Fig. 4B is a schematic diagram illustrating the information acquisition page according to the embodiment as shown in Fig. 4A.
Fig. 5A is a flowchart illustrating an information acquisition method according to another exemplary embodiment.
Fig. 5B is a schematic diagram illustrating the information acquisition page according to the embodiment as shown in Fig. 5A.
Fig. 6A is a flowchart illustrating an information acquisition method according to another exemplary embodiment.
Fig. 6B is a schematic diagram illustrating the information acquisition page according to the embodiment as shown in Fig. 6A.
Fig. 7 is a block diagram illustrating an information acquisition device according to an exemplary embodiment.
Fig. 8 is a block diagram illustrating an information acquisition device according to another exemplary embodiment.
Fig. 9 is a block diagram illustrating an information acquisition device according to another exemplary embodiment.
Fig. 10 is a block diagram illustrating an information acquisition device according to another exemplary embodiment.
Fig. 11 is a block diagram illustrating an information acquisition device according to an exemplary embodiment.
Fig. 12 is a block diagram illustrating an information acquisition device according to an exemplary embodiment.
Fig. 13 is a block diagram illustrating an information acquisition system according to an exemplary embodiment.

Specific embodiments of the present invention are shown by the above drawings, and more detailed description will be made hereinafter. These drawings and text description are not for limiting the scope of conceiving the present invention in any way, but for illustrating the concept of the present invention for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not cover all implementations consistent with the invention. Instead, they are merely examples of apparatuses and methods consistent with aspects related to the invention as recited in the appended claims.

A "voice channel" established in a CS (Circuit Switched) domain is generally employed for conducting a voice call herein, and the voice channel is configured to conduct a telephone voice service.

The "data channel" as recited herein is generally a channel established in a PS (Packet Switch) domain or Internet, configured to conduct a data transmission service.

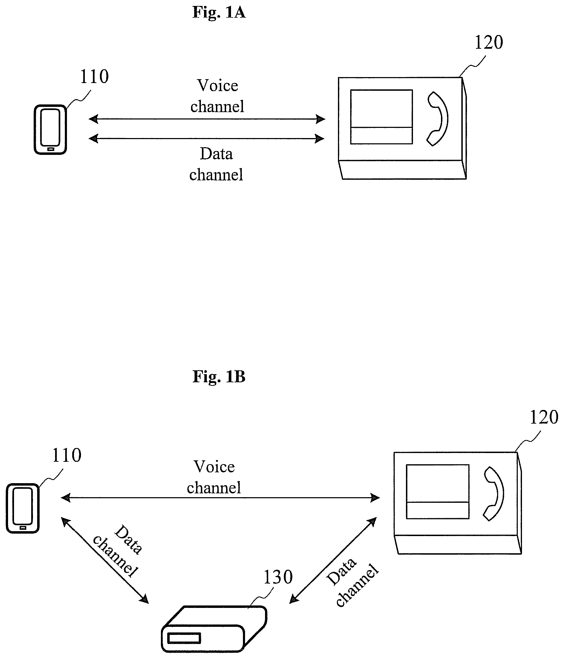

Fig. 1A is a schematic diagram illustrating an implementation environment of an information acquisition method according to the embodiments of the present invention. The implementation environment comprises: a user terminal 110 and a telephone agent system 120.

The user terminal 110 is an electronic equipment capable of establishing a data channel when conducting a voice call. For example, the user terminal 110 may be a smart mobile phone or a tablet computer with telephone function and the like.

The telephone agent system 120 is an electronic equipment capable of establishing a data channel when conducting a voice call.

A voice channel and a data channel may be established between the user terminal 110 and the telephone agent system 120.

Fig. 1B is a schematic diagram illustrating another implementation environment of an information acquisition method according to the embodiments. The implementation environment comprises: a user terminal 110, a telephone agent system 120 and a third-party server 130.

The user terminal 110 is an electronic equipment capable of establishing a data channel when conducting a voice call. For example, the user terminal 110 may be a smart mobile phone or a tablet computer with telephone function and the like.

The telephone agent system 120 is an electronic equipment capable of establishing a data channel for conducting a voice call.

The third-party service platform 130 may be a server, or a server cluster consisting of a plurality of servers, or a cloud computing service center.

A voice channel may be directly established between the user terminal 110 and the telephone agent system 120, and a data channel may be established between the user terminal 110 and the telephone agent system 120 by means of the third-party service platform 130.

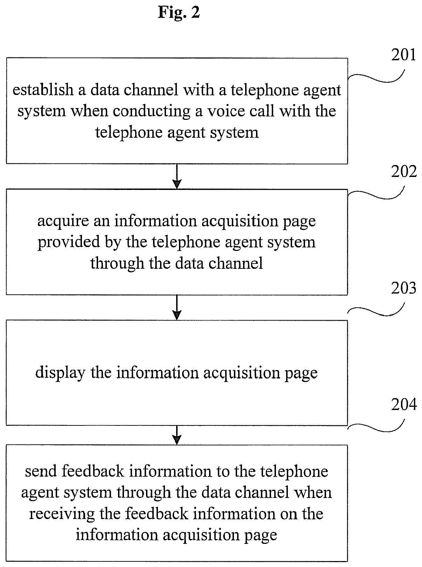

Fig. 2 is a flowchart illustrating an information acquisition method according to an embodiment. The embodiment is illustrated by applying the information acquisition method to the user terminal 110 in the implementation environment as shown in Fig. 1A. The information acquisition method may include following steps:
In Step 201, a data channel is established with a telephone agent system when conducting a voice call with the telephone agent system.
In Step 202, an information acquisition page provided by the telephone agent system through the data channel is acquired.
In Step 203, the information acquisition page is displayed.
In Step 204, feedback information is sent to the telephone agent system through the data channel when receiving the feedback information on the information acquisition page.

In conclusion, the information acquisition method provided by the embodiment is implemented by acquiring an information acquisition page through a data channel established with a telephone agent system and making a satisfaction survey by means of the information acquisition page. Thus the invention solves the problem of related technologies in which more user input operations are required for making a satisfaction survey by means of a text message and which is unable to obtain a satisfaction survey result from a user terminal in case of a format input error of the text message thus causing the whole process being inefficient in terms of information acquisition. The embodiment achieves the effect that the telephone agent system may acquire feedback information as long as a user performs a simple operation on the information acquisition page.

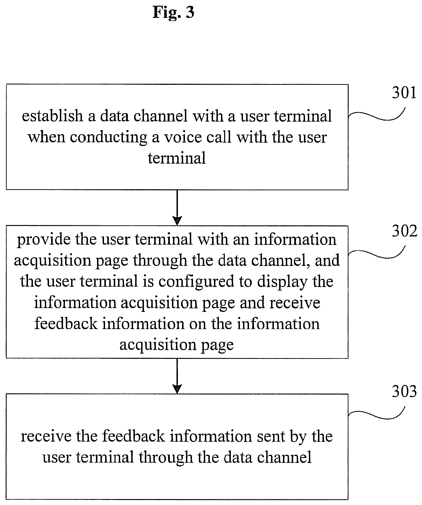

Fig. 3 is a flowchart illustrating an information acquisition method according to another embodiment. The embodiment is illustrated by applying the information acquisition method to the telephone agent system 120 in the implementation environment shown in Fig. 1A. The information acquisition method may include following steps:
In Step 301, a data channel is established with a user terminal when conducting a voice call with the user terminal.
In Step 302, the user terminal is provided with an information acquisition page through the data channel, and the user terminal is configured to display the information acquisition page and receive feedback information on the information acquisition page.
In Step 303, the feedback information sent by the user terminal through the data channel is received.

In conclusion, the information acquisition method provided by the embodiment is implemented by providing a user terminal with an information acquisition page through a data channel established with the user terminal and making a satisfaction survey by means of the information acquisition page. The embodiment thus solves the problem of related technologies in which more user input operations are required for making a satisfaction survey by means of a text message and which is unable to obtain a satisfaction survey result from a user terminal in case of a format input error of the text message thus causing the whole process being inefficient in terms of information acquisition. The embodiment achieves the effect that the telephone agent system may acquire feedback information as long as a user performs a simple operation on the information acquisition page.

Herein "when conducting a voice call" may include a predetermined time period before establishing the voice channel, a time period with the voice channel being established, and a predetermined time period after disconnecting the voice channel.

Three embodiments are illustrated hereinafter on the basis of different information acquisition time.

In the first embodiment, user satisfaction survey results are acquired from a user terminal after the telephone agent system ends a conversation.

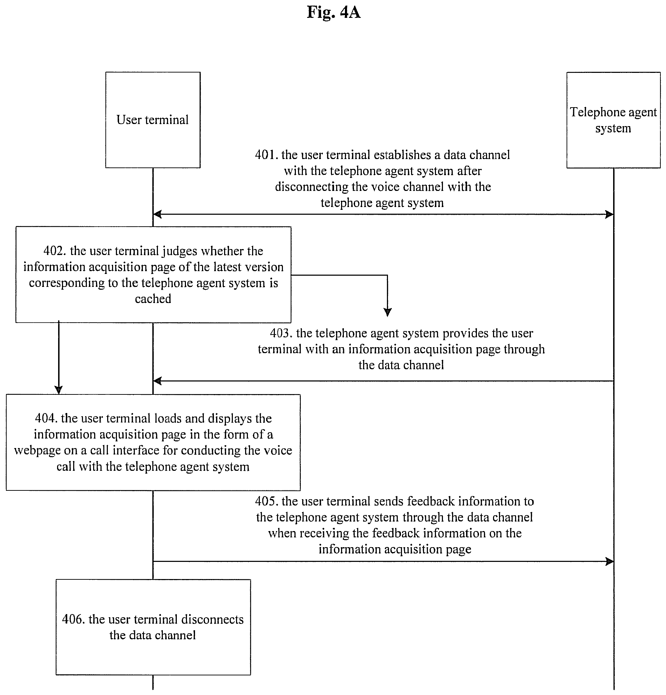

Fig. 4A is a flowchart illustrating an information acquisition method according to another embodiment. The embodiment is illustrated by applying the information acquisition method to implementation environments as shown in Fig. 1A and Fig. 1B. The information acquisition method may include following steps:
In Step 401, a data channel is established with the telephone agent system after the user terminal disconnects the voice channel with the telephone agent system.

After a voice call between the user terminal and the telephone agent system is ended, a data channel may be established between the user terminal and the telephone agent system for making a satisfaction survey or other information surveys.

There are two modes for establishing the data channel as described below.

In the first mode, the data channel is directly established between the user terminal and the telephone agent system.

In the second mode, the user terminal may establish the data channel between the (local) user's terminal and the telephone agent system by means of a third-party service platform, which is configured to record various data relating to respective user terminals during carrying out the information acquisition method provided by the embodiment.

The first mode of establishment includes the following substeps.
1. The telephone agent system sends a data channel establishment request to the user terminal, e.g.:
   upon completion of a call with the user terminal, the telephone agent system may send the data channel establishment request to the user terminal if it is necessary to make a satisfaction survey.
2. After receiving the data channel establishment request, the user terminal may establish a data channel with the telephone agent system;
   it is up to the user whether to establish the data channel between the user terminal and the telephone agent system.

It should be explained that the data channel establishment request may also be sent by the user terminal to the telephone agent system, which establishes a data channel after receiving the request.

The second mode of establishment includes the following substeps.
1. The telephone agent system sends a data channel establishment (with the user terminal) request to the third-party service platform;
2. the third-party server sends the data channel establishment request to the corresponding user terminal;
3. After receiving the data channel establishment request, the user terminal may establish a data channel with the telephone agent system through the third-party service platform. Namely, a data channel may be firstly established between the telephone agent system and the third-party service platform, and then a data channel is established between the user terminal and the third-party service platform. After the data channel is established successfully, all data transmitted between the user terminal and the telephone agent system should be forwarded by the third-party service platform.

Which one of the foregoing modes should be used to establish a data channel between the user terminal and the telephone agent system, may be determined by the user terminal or the telephone agent system, according to the actual situation.

In Step 402, the user terminal judges whether the information acquisition page of the latest version corresponding to the telephone agent system is cached.

After a data channel is established between the user terminal and the telephone agent system, the user terminal shall firstly judge whether the information acquisition page of the latest version corresponding to the telephone agent system is cached locally. The information acquisition page cached may be acquired from a call history. This step includes the two following cases.

Case I: the step of acquiring an information acquisition page provided by the telephone agent system through the data channel is executed if the information acquisition page of the latest version corresponding to the telephone agent system is not cached at the user terminal.

Case I may include the two following possible scenarios:
1) An information acquisition page (not the latest version) is cached at the user terminal:
   An information acquisition page is cached at the user terminal. However, the information acquisition page is not the information acquisition page of the latest version, i.e., the user terminal may acquire version number information of the information acquisition page of the latest version from the telephone agent system through the data channel, and then judge whether the information acquisition page cached is the latest version according to the version number information. The Step 403 is executed if the information acquisition page cached at the user terminal is an information acquisition page of a historical version instead of the information acquisition page of the latest version.
2) No information acquisition page of any version is cached at the user terminal;
   The Step 403 is directly executed if no information acquisition page is cached at the user terminal.

It should be explained that after judging that no information acquisition page of the latest version corresponding to the telephone agent system is cached, the user terminal may send the telephone agent system an instruction of waiting for receiving an information acquisition page so as to inform the telephone agent system that no information acquisition page of the latest version corresponding to the telephone agent system is cached at the user terminal.

Case II: the step of displaying the information acquisition page is directly executed if the information acquisition page of the latest version corresponding to the telephone agent system is cached at the user terminal.

An information acquisition page (the latest version) is cached at the user terminal. Namely, the telephone agent system may provide the user terminal with version information relating to the information acquisition page of the latest version through the data channel, and then the user terminal judges whether the information acquisition page cached is the latest version according to the version information. The Step 404 is executed if the information acquisition page cached at the user terminal is the latest version.

In Step 403, the telephone agent system provides the user terminal with an information acquisition page through the data channel.

After receiving the instruction of waiting for receiving an information acquisition page sent by the user terminal, the telephone agent system may provide the user terminal with an information acquisition page which may be a page in the form of a webpage, i.e., the user terminal acquires through the data channel an information acquisition page provided by the telephone agent system in the form of a webpage. And the webpage form may use HTML (Hyper Text Markup Language) as a standard.

Based on different modes for acquiring an information acquisition page, this step may be divided into the two following cases.

### Case I:

1. The user terminal sends a page acquisition request to the telephone agent system through the data channel;
   the request may either be automatically sent by the user terminal or sent by the user operating the user terminal.
2. The telephone agent system provides the user terminal with an information acquisition page in the form of a webpage according to the page acquisition request;
   i.e., after receiving the page acquisition request sent by the user terminal, the telephone agent system sends an information acquisition page in the form of a webpage to the user terminal which receives the information acquisition page in the form of a webpage.

As an information acquisition page may include one or more pages, the page acquisition request may be a request to directly acquire all pages in an information acquisition page, or a request to acquire only one page in an information acquisition page. For example, the homepage of an information acquisition page is firstly acquired, and then when a button in the homepage is pressed, a subpage corresponding to the button is acquired.

### Case II:

The telephone agent system pushes an information acquisition page in the form of a webpage to the user terminal through the data channel.

Namely, the telephone agent system directly sends an information acquisition page in the form of a webpage to the user terminal which receives the information acquisition page in the form of a webpage. The push process may be under the control of customer service staff of the telephone agent system.

It should be explained that if an information acquisition page of a historical version is cached at the user terminal, at the time of receiving the information acquisition page of the latest version, the user terminal may not receive that part as same as in the historical information acquisition page. Information relating to judgment of the same part may be included in version information relating to the information acquisition page of the latest version acquired by the user terminal in Step 402. Or, the telephone agent system firstly acquires the version number of the historical information acquisition page cached at the user terminal, and then sends different parts between the information acquisition page of the latest version and the historical information acquisition page to the user terminal according to the version number. In this way, it is possible to achieve the effect of reducing waste of communication resource and improving the information acquisition efficiency.

In Step 404, the user terminal loads and displays the information acquisition page in the form of a webpage on a call interface for conducting the voice call with the telephone agent system.

Although the voice channel between the user terminal and the telephone agent system has been disconnected at the moment, the user terminal may still load and display the information acquisition page in the form of a webpage on the call interface for conducting the voice call with the telephone agent system.

It should be explained that the information acquisition page includes one or more pages organized according to a tree menu structure, i.e., the information acquisition page includes not merely one page but may include a series of combined pages.

When there is a plurality of information acquisition pages, the user terminal may display the information acquisition pages according to display control signal from the user and/or customer service staff, for example, switching the information acquisition page displayed currently. Based on different staffs triggering display control signal, there are two modes for acquiring display control signal.

### Mode I:

The user terminal receives the display control signal triggered by a user, i.e., the user sends the display control signal by operating the user terminal. The signal may be sent out by a user input into an information acquisition page.

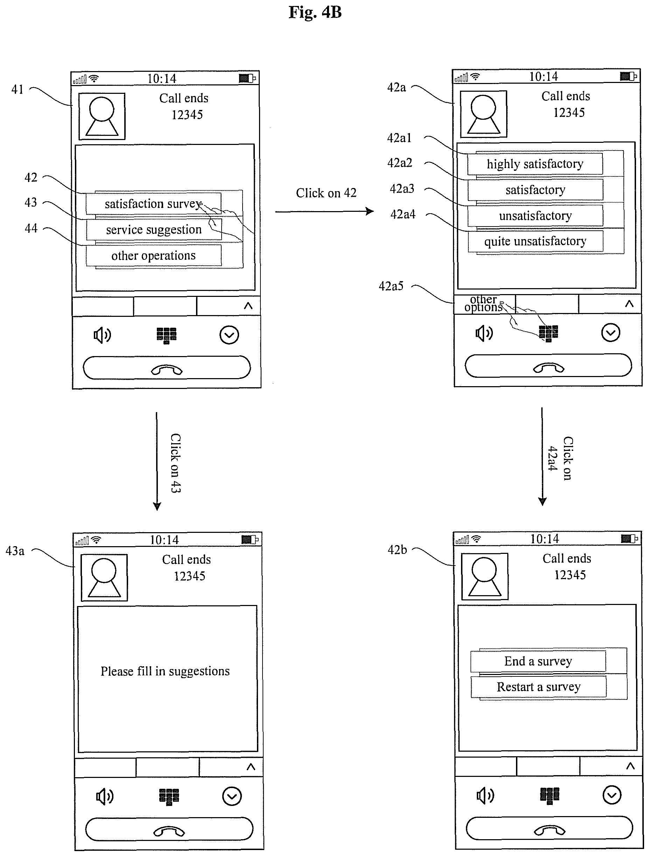

For example, as shown in Fig. 4B, a page 41 is a homepage of an information acquisition page in the form of a webpage, including three option buttons: "satisfaction survey" button 42, "service suggestion" button 43 and "other operations" button 44. The user terminal will shift to a subpage 42a if the user clicks on the button 42; and the user terminal will shift to a subpage 43a if the user clicks on the button 43. Exemplarily, the user terminal shifts to a subpage 42a after the user clicks on the button 42, on the subpage 42a there are five buttons: "highly satisfactory" button 42a1, "satisfactory" button 42a2, "unsatisfactory" button 42a3, "quite unsatisfactory" button 42a4 and "other options" button 42a5; and the user terminal will shift to a subpage 42b of the subpage 42a if the user clicks on the button 42a5.

### Mode II:

1. The telephone agent system receives a display control instruction;
   the display control instruction may either be sent out from customer service staff of the telephone agent system by controlling the telephone agent system, or be sent out by a preset program in the telephone agent system.
2. The telephone agent system sends a display control signal to the user terminal according to the display control instruction;
   after receiving the display control instruction, the telephone agent system sends a display control signal to the user terminal according to the instruction.
3. The user terminal receives the display control signal sent by the telephone agent system;
   the user terminal receives the display control signal through the data channel.

Namely, the user terminal may be controlled by at least one of the user and the telephone agent system. In actual application process, the user terminal may acquire display control signal by means of at least one of the foregoing two modes.

After acquiring the display control signal, the user terminal displays the information acquisition page on the call interface according to the display control signal.

As shown in Fig. 4B, customer service staff of the telephone agent system may directly make a satisfaction survey by controlling a user terminal display page 42a by means of the display control signal.

In Step 405, the user terminal sends feedback information to the telephone agent system through the data channel at the time of receiving the feedback information on the information acquisition page.

The user terminal sends feedback information to the telephone agent system through the data channel at the time of receiving the feedback information sent by a user on the information acquisition page. For example, as shown in Fig. 4B, after entering into the page 42a by hand operation or under the control of the telephone agent system, the user may send feedback information by clicking on the "highly satisfactory" button 42a1, the "satisfactory" button 42a2, the "unsatisfactory" button 42a3 and the "quite unsatisfactory" button 42a4, and the feedback information may be a user satisfaction survey result.

The telephone agent system receives the feedback information sent by the user terminal through the data channel, i.e., the telephone agent system acquires the user satisfaction survey result.

In Step 406, the user terminal disconnects the data channel.

After sending feedback information to the telephone agent system, the user terminal may take initiative to disconnect the data channel, thus ending the information acquisition process.

In conclusion, the information acquisition method provided by the embodiment is implemented by establishing a data channel between a telephone agent system and a user terminal so that the user terminal may acquire an information acquisition page from the telephone agent system and make a satisfaction survey by means of the information acquisition page. The embodiment thus solves the problem of related technologies in which more user input operations are required for making a satisfaction survey by means of a text message and which is unable to obtain a satisfaction survey result from the user terminal in case of a format input error of the text message thus causing the whole process being inefficient in terms of information acquisition. The embodiment achieves the effect that the telephone agent system may acquire a satisfaction survey result as long as a user performs a simple operation on the information acquisition page.

It should be additionally explained that the information acquisition method provided by the embodiment is implemented by two display control methods including triggering a display control signal by a user and sending a display control signal by the telephone agent system, thus increasing diversity of display control methods and achieving the effect of reducing user operation when the user terminal is displayed according to a display control signal sent by the telephone agent system.

It should be additionally explained that the information acquisition method provided by the embodiment is implemented by organizing an information acquisition page according to a tree menu structure, thus the telephone agent system may quickly acquire information as long as a user clicks a corresponding button, achieving the effect of improving the information acquisition efficiency.

It should be additionally explained that the information acquisition method provided by the embodiment is implemented by judging whether the information acquisition page of the latest version is cached at a user terminal and directly displaying the information acquisition page of the latest version if the information acquisition page of the latest version is cached at the user terminal, thus achieving the effect of reducing waste of communication resource and improving the information acquisition efficiency.

In the second embodiment, a questionnaire survey of the user terminal is made when the telephone agent system is in a call.

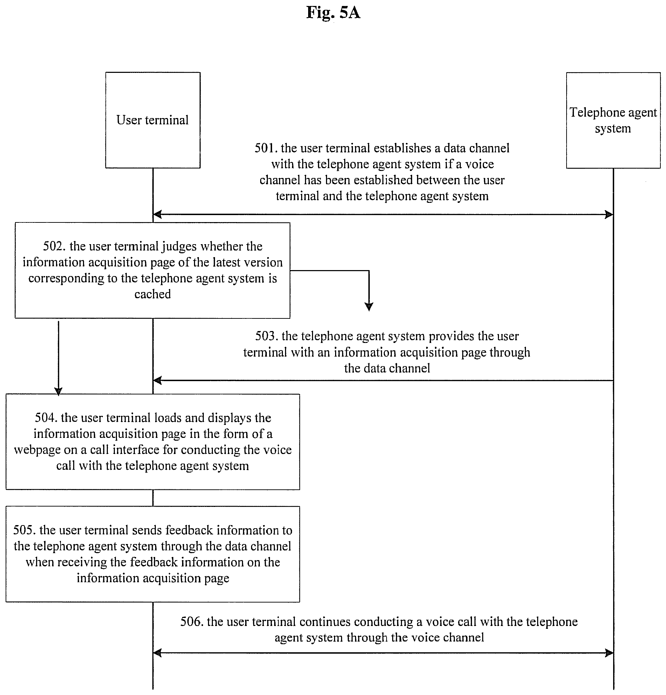

Fig. 5A is a flowchart illustrating an information acquisition method according to another embodiment. The embodiment is illustrated by applying the information acquisition method to implementation environments as shown in Fig. 1A and Fig. 1B. The information acquisition method may include the following steps:
In Step 501, the user terminal establishes a data channel with the telephone agent system if a voice channel has been established between the user terminal and the telephone agent system.

A data channel is established between the user terminal and the telephone agent system for making a questionnaire survey if a voice channel has been established between the user terminal and the telephone agent system.

This step may refer to Step 401 in the information acquisition method according to Fig. 4A.

In Step 502, the user terminal judges whether the information acquisition page of the latest version corresponding to the telephone agent system is cached.

After a data channel is established between the user terminal and the telephone agent system, the user terminal shall firstly judge whether the information acquisition page of the latest version corresponding to the telephone agent system is cached locally. This step includes following the two cases of judgment results:
Case I: the step of acquiring an information acquisition page provided by the telephone agent system through the data channel is executed if the information acquisition page of the latest version corresponding to the telephone agent system is not cached.
   Case I may include the two following possible scenarios:
   1) An information acquisition page (not the latest version) is cached at the user terminal;
      The user terminal may acquire version information relating to the information acquisition page of the latest version through the data channel, and then judge whether the information acquisition page cached is the latest version according to the version information. The Step 503 is executed if the information acquisition page cached at the user terminal is a historical information acquisition page instead of the information acquisition page of the latest version.
   2) No information acquisition page of any version is cached at the user terminal;
      The Step 503 is directly executed if no information acquisition page is cached at the user terminal.

   It should be explained that after judging that no information acquisition page is cached, the user terminal may send the telephone agent system an instruction of waiting for receiving an information acquisition page, so as to inform the telephone agent system that no information acquisition page of the latest version corresponding to the telephone agent system is cached at the user terminal.
Case II: the step of displaying the information acquisition page is directly executed if the information acquisition page of the latest version corresponding to the telephone agent system is cached at the user terminal.

An information acquisition page (the latest version) is cached at the user terminal. Namely, the user terminal may acquire version information relating to the information acquisition page of the latest version through the data channel, and then judge whether the information acquisition page cached is the latest version according to the version information. The Step 504 is executed if the information acquisition page cached at the user terminal is the latest version.

In Step 503, the telephone agent system provides the user terminal with an information acquisition page through the data channel.

After receiving the instruction of waiting for receiving an information acquisition page sent by the user terminal, the telephone agent system may provide the user terminal with an information acquisition page which may be a page in the form of a webpage, i.e., the user terminal acquires through the data channel an information acquisition page provided by the telephone agent system in the form of a webpage. And the webpage form may use HTML (Hyper Text Markup Language) as a standard.

Based on different modes for acquiring an information acquisition page, this step may be divided into following two cases, both of which may refer to Step 403 in the information acquisition method according to Fig. 4A.

It should be explained that, in the embodiment, both modes for acquiring an information acquisition page may be used in combination. For example, the user terminal may firstly send a page acquisition request and acquire a homepage in an information acquisition page from the telephone agent system, and then acquire a subpage corresponding to a button in the homepage from the telephone agent system when the button is pressed by a user. After the user terminal displays a subpage, on the basis of the voice call between the user and customer service staff, the customer service staff may also take initiative to push another subpage in the information acquisition page to the user terminal by means of the telephone agent system so that the user terminal may display the subpage.

It should be explained that if a historical information acquisition page is cached at the user terminal, at the time of receiving the information acquisition page of the latest version, the user terminal may not receive that part as same as in the historical information acquisition page. Information relating to judgment of the same part may be included in version information relating to the information acquisition page of the latest version acquired by the user terminal in Step 502. Or, the telephone agent system firstly acquires the version number of the historical information acquisition page cached at the user terminal, and then sends different parts between the information acquisition page of the latest version and the historical information acquisition page to the user terminal according to the version number. In this way, it is possible to achieve the effect of reducing waste of communication resource and improving the information acquisition efficiency.

In Step 504, the user terminal loads and displays the information acquisition page in the form of a webpage on a call interface for conducting the voice call with the telephone agent system.

The user terminal loads and displays the information acquisition page in the form of a webpage on the call interface for conducting the voice call with the telephone agent system through the voice channel.

It should be explained that the information acquisition page includes one or more pages organized according to a tree menu structure, i.e., the information acquisition page includes not merely one page but may include a series of combined pages.

When there is a plurality of information acquisition pages, the user terminal may display the information acquisition pages according to display control signal of the user and/or customer service staff, for example, switching the information acquisition pages displayed currently.

For different persons (including the users or the customer service staff), there are two modes for acquiring display control signal.

### Mode I:

The user terminal receives the display control signal triggered by a user, i.e., the user sends the display control signal by operating the user terminal. The signal may be sent out by a user input into a default page which may be a page stored in advance at the user terminal.

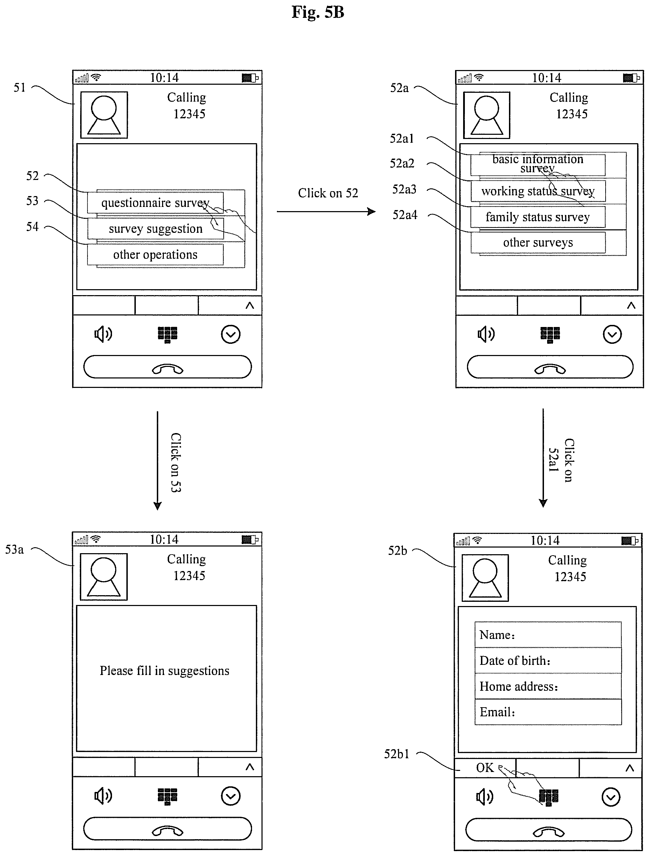

For example, as shown in Fig. 5B, a page 51 is a homepage of an information acquisition page in the form of a webpage, including three option buttons: "questionnaire survey" button 52, "survey suggestion" button 53 and "other operations" button 54. The user terminal will shift to a subpage 52a if the user clicks on the button 52; and the user terminal will shift to a subpage 53a if the user clicks on the button 53. Exemplarily, the user terminal shifts to a subpage 52a after the user clicks on the button 52, on the subpage 52a there are four buttons: "basic information survey" button 52a1, "working status survey" button 52a2, "family status survey" button 52a3 and "other surveys" button 52a4; and the user terminal will shift to a subpage 52b of the subpage 52a if the user clicks on the button 52a1.

### Mode II:

1. The telephone agent system receives a display control instruction;
   the display control instruction may either be sent out from customer service staff of the telephone agent system by controlling the telephone agent system, or be sent out by a preset program in the telephone agent system.
2. The telephone agent system sends a display control signal to the user terminal according to the display control instruction;
   after receiving the display control instruction, the telephone agent system sends a display control signal to the user terminal according to the instruction.
3. The user terminal receives the display control signal sent by the telephone agent system;
   the user terminal receives the display control signal through the data channel.

For example, in Fig. 5B, the telephone agent system may directly control the user terminal to display the subpage 52b so that a user may conduct a questionnaire survey of basic information.

In an application process, a terminal may select at least one of the two modes for acquiring display control signal, i.e., the user terminal may be controlled by at least one of the user or the telephone agent system.

After acquiring the display control signal, the user terminal displays the information acquisition page on the call interface according to the display control signal.

In Step 505, the user terminal sends feedback information to the telephone agent system through the data channel at the time of receiving the feedback information on the information acquisition page.

The user terminal sends feedback information to the telephone agent system through the data channel at the time of receiving the feedback information sent by a user on the information acquisition page. For example, as shown in Fig. 5B, the user clicks a button 52b1 after filling in basic information on the subpage 52b, and the user terminal sends the basic information filled in by the user to the telephone agent system as feedback information.

The telephone agent system receives the feedback information sent by the user terminal through the data channel, i.e., the telephone agent system completes the questionnaire survey of the user.

It should be explained that the telephone agent system may assist the user in making a questionnaire survey through the voice channel, for example, providing the user with some precautions during making the questionnaire survey.

In Step 506, the user terminal continues conducting the voice call with the telephone agent system through the voice channel.

After sending the feedback information to the telephone agent system, the user terminal may disconnect the data channel and continue conducting the voice call with the telephone agent system, or not disconnect the data channel and conduct the voice call with the telephone agent system, thus realizing collaboration of the voice channel and the data channel.

In conclusion, the information acquisition method provided by the embodiment is implemented by establishing a data channel between a telephone agent system and a user terminal so that the user terminal may acquire an information acquisition page from the telephone agent system and acquire information by means of the information acquisition page. The embodiment thus solves the problem of related technologies in which more user input operations are required for making a satisfaction survey by means of a text message and which is unable to obtain a satisfaction survey result from the user terminal in case of a format input error of the text message thus causing the whole process being inefficient in terms of information acquisition. The embodiment achieves the effect that the telephone agent system may acquire feedback information as long as a user performs a simple operation on the information acquisition page.

It should be additionally explained that the information acquisition method provided by the embodiment is implemented by two display control methods including triggering a display control signal by a user and sending a display control signal by the telephone agent system, thus increasing diversity of display control methods and achieving the effect of reducing user operation when the user terminal is displayed according to a display control signal sent by the telephone agent system.

It should be additionally explained that the information acquisition method provided by the embodiment is implemented by organizing an information acquisition page according to a tree menu structure, thus the telephone agent system may quickly acquire information as long as a user clicks a corresponding button, achieving the effect of improving the information acquisition efficiency.

It should be additionally explained that the information acquisition method provided by the embodiment is implemented by judging whether the information acquisition page of the latest version is cached at a user terminal and directly displaying an information acquisition page of the latest version if the information acquisition page of the latest version is cached at the user terminal, thus achieving the effect of reducing waste of communication resource and improving information acquisition efficiency.

In the third embodiment, information relating to (what kind of) voice service required by the user terminal is acquired by the telephone agent system before conducting a call.

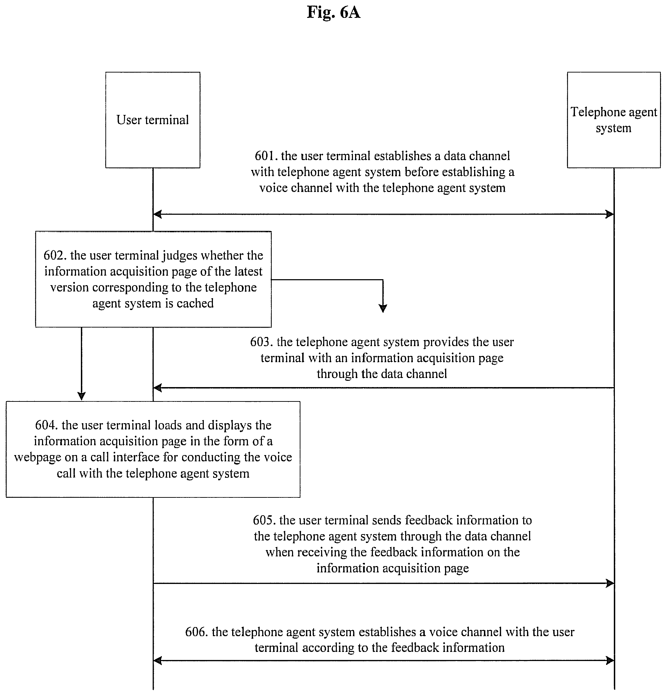

Fig. 6A represents a flowchart illustrating an information acquisition method according to another embodiment. The embodiment is illustrated by applying the information acquisition method to implementation environments as shown in Fig. 1A or Fig. 1B. The information acquisition method may include following steps:
In Step 601, the user terminal establishes a data channel with telephone agent system before establishing a voice channel with the telephone agent system.

This step may refer to Step 401 in the information acquisition method according to Fig. 4A.

In Step 602, the user terminal judges whether the information acquisition page of the latest version corresponding to the telephone agent system is cached.

This step may refer to Step 402 in the information acquisition method according to Fig. 4A.

Step 603 is executed if no information acquisition page is cached or an information acquisition page (not the latest version) is cached at the user terminal; and Step 604 is executed if the information acquisition page of the latest version is cached at the user terminal.

In Step 603, the telephone agent system provides the user terminal with an information acquisition page through the data channel.

After receiving the instruction of waiting for receiving an information acquisition page sent by the user terminal, the telephone agent system may provide the user terminal with an information acquisition page which may be a page in the form of a webpage, i.e., the user terminal acquires through the data channel an information acquisition page provided by the telephone agent system in the form of a webpage. And the webpage form may use HTML (Hyper Text Markup Language) as a standard.

Based on different modes for acquiring an information acquisition page, this step may be divided into the two following cases.

### Case I:

1. The user terminal sends a page acquisition request to the telephone agent system through the data channel;
   the request may either be automatically sent by the user terminal or sent from a user by operating the user terminal.
2. The telephone agent system provides the user terminal with an information acquisition page in the form of a webpage according to the page acquisition request;
   i.e., after receiving the page acquisition request sent by the user terminal, the telephone agent system sends an information acquisition page in the form of a webpage to the user terminal which receives the information acquisition page in the form of a webpage.

As an information acquisition page may include one or more pages, the page acquisition request may be a request to directly acquire all pages in an information acquisition page, or a request to acquire only one page in an information acquisition page. For example, the homepage of an information acquisition page is firstly acquired, and then when a button in the homepage is pressed, a subpage corresponding to the button is acquired.

### Case II:

The telephone agent system pushes an information acquisition page in the form of a webpage to the user terminal through the data channel.

Namely, the telephone agent system directly sends an information acquisition page in the form of a webpage to the user terminal which receives the information acquisition page in the form of a webpage. The push process may be under the control of customer service staff of the telephone agent system.

Likewise, as an information acquisition page may include one or more pages, in a single push process, the telephone agent system may push all pages in an information acquisition page, or push only one page in an information acquisition page under the control of customer service staff.

Both the foregoing modes for acquiring an information acquisition page may be used in combination. For example, firstly the telephone agent system pushes the homepage of an information acquisition page to the user terminal, then the user terminal sends the telephone agent system an acquisition request of a subpage corresponding to a button in the homepage when the button is pressed by the user, and then the user terminal receives the subpage (corresponding to the button) sent by the telephone agent system.

In Step 604, the user terminal loads and displays the information acquisition page in the form of a webpage on a call interface for conducting the voice call with the telephone agent system.

Although the voice channel between the user terminal and the telephone agent system has not been established at the moment, the user terminal may still firstly enter into the call interface and load and display the information acquisition page in the form of a webpage on the call interface.

It should be explained that the information acquisition page includes one or more pages organized according to a tree menu structure, i.e., the information acquisition page includes not merely one page but may include a series of combined pages.

When there is a plurality of information acquisition pages, the user terminal may display the information acquisition pages according to display control signal of the user or customer service staff, for example, switching the information acquisition pages displayed currently. For different persons (including the users and the customer service staff), there are two modes for acquiring the display control signal.

### Mode I:

The user terminal receives the display control signal triggered by a user, i.e., the user sends the display control signal by operating the user terminal. The signal may be sent out by a user input into an information acquisition page.

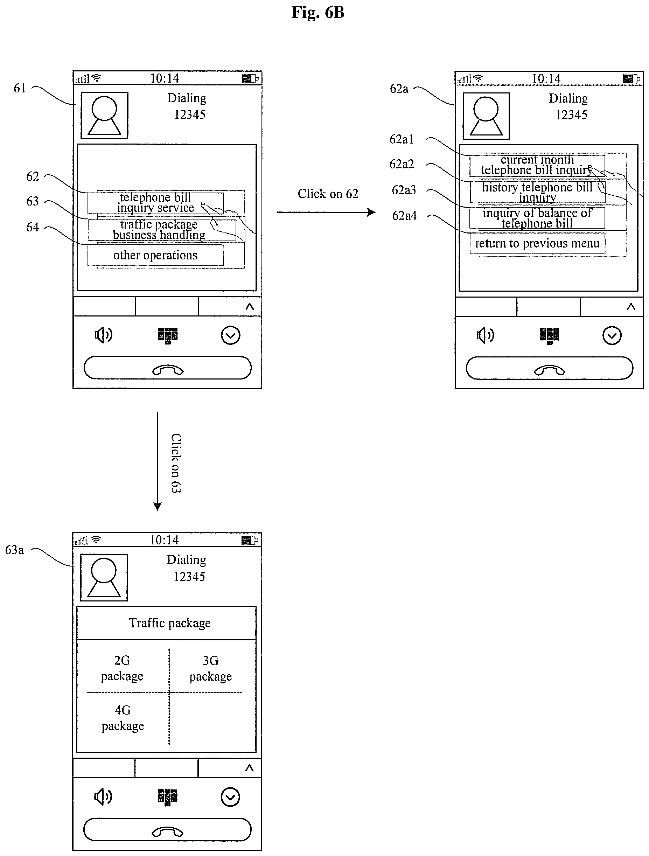

For example, as shown in Fig. 6B, a page 61 is a homepage of an information acquisition page in the form of a webpage, including three options: "telephone bill inquiry service" 62, "traffic package business handling" 63 and "other operations" 64. The user terminal will shift to a subpage 62a if the user clicks on the button 62; and the user terminal will shift to a subpage 63a if the user clicks on the button 63. Exemplarily, the user terminal shifts to a subpage 62a after the user clicks on the button 62, on the subpage 62a there are four buttons: "current month telephone bill inquiry" 62a1, "history telephone bill inquiry" 62a2, "inquiry of balance of telephone bill" 62a3 and "return to previous menu" 62a4.

### Mode II:

1. The telephone agent system receives a display control instruction;
   the display control instruction may either be sent out from the telephone agent system under the control of customer service staff of the telephone agent system, or be sent out by a preset program in the telephone agent system; and the telephone agent system receives the display control instruction.
2. The telephone agent system sends a display control signal to the user terminal according to the display control instruction;
   after receiving the display control instruction, the telephone agent system sends a display control signal to the user terminal according to the instruction.
3. The user terminal receives the display control signal sent by the telephone agent system;
   the user terminal receives the display control signal through the data channel.

As shown in Fig. 6B, the telephone agent system may directly control the user terminal to display page 62a by means of the display control signal so that the user may select the voice service required.

In an application process, a terminal may select at least one of the two modes for acquiring display control signal, i.e., the user terminal may be controlled by at least one of the user or the telephone agent system.

After acquiring the display control signal, the user terminal displays the information acquisition page on the call interface according to the display control signal.

In Step 605, the user terminal sends feedback information to the telephone agent system through the data channel at the time of receiving the feedback information on the information acquisition page.

The user terminal sends feedback information to the telephone agent system through the data channel at the time of receiving the feedback information sent by a user on the information acquisition page. For example, after entering into the page 62a by manual operation or under the control of the telephone agent system, the user may send feedback information by clicking on the "current month telephone bill inquiry" 62a1, the "history telephone bill inquiry" 62a2 or the "inquiry of balance of telephone bill" 62a3, and the feedback information may include information relating to (which kind of) voice service required by the user.

The telephone agent system receives the feedback information sent by the user terminal through the data channel, i.e., the telephone agent system acquires information relating to (what kind of) voice service required.

In Step 606, the telephone agent system establishes a voice channel with the user terminal according to the feedback information.

After information relating to (what kind of) voice service required by the user is acquired, a corresponding voice channel is established between the telephone agent system and the user terminal. For example, as shown in Fig. 6B, if the user clicks on the "current month telephone bill inquiry" 62a1, the telephone agent system will get the user terminal through to the voice channel for inquiry of the telephone bill of the current month.

In conclusion, the information acquisition method provided by the embodiment is implemented by establishing a data channel between a telephone agent system and a user terminal so that the user terminal may acquire an information acquisition page from the telephone agent system and acquire information by means of the information acquisition page. The embodiment thus solves the problem of related technologies in which more user input operations are required for making a satisfaction survey by means of a text message and which is unable to obtain a satisfaction survey result from the user terminal in case of a format input error of the text message thus causing the whole process being inefficient in terms of information acquisition. The embodiment achieves the effect that the telephone agent system may acquire feedback information as long as a user performs a simple operation on the information acquisition page.

It should be additionally explained that the information acquisition method provided by the embodiment is implemented by two display control methods including triggering a display control signal by a user and sending a display control signal by the telephone agent system, thus increasing diversity of display control methods and achieving the effect of reducing user operation when the user terminal is displayed according to a display control signal sent by the telephone agent system.

It should be additionally explained that the information acquisition method provided by the embodiment is implemented by organizing an information acquisition page according to a tree menu structure, thus the telephone agent system may quickly acquire information as long as a user clicks a corresponding button, achieving the effect of improving the information acquisition efficiency.

It should be additionally explained that the information acquisition method provided by the embodiment is implemented by judging whether the information acquisition page of the latest version is cached at a user terminal and directly displaying the information acquisition page of the latest version if the information acquisition page of the latest version is cached at the user terminal, thus achieving the effect of reducing waste of communication resource and improving the information acquisition efficiency.

It should be explained that the information acquisition method provided by the embodiment is implemented by acquiring information relating to (what kind of) voice service required by the user before a voice channel is established between the telephone agent system and the user terminal and then directly getting the user terminal through to a corresponding voice service, thus achieving the effect of reducing the workload of the voice channel for the telephone agent system.

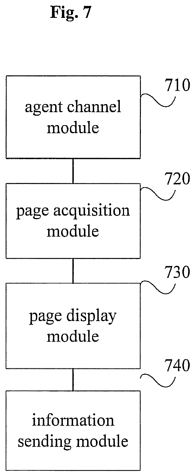

Fig. 7 is a block diagram illustrating an information acquisition device according to an exemplary embodiment. The information acquisition device may be implemented in or as the user terminal 110 in the implementation environment as shown in Fig. 1 in part or in whole by means of software or hardware or combination of both. The information acquisition device may include: an agent channel module 710, a page acquisition module 720, a page display module 730 and an information sending module 740.

The agent channel module 710 is configured to establish a data channel with a telephone agent system when conducting a voice call with the telephone agent system.

The page acquisition module 720 is configured to acquire an information acquisition page provided by the telephone agent system through the data channel.

The page display module 730 is configured to display the information acquisition page.

The information sending module 740 is configured to send feedback information to the telephone agent system through the data channel at the time of receiving the feedback information on the information acquisition page.

In conclusion, the information acquisition device provided by the embodiment is implemented by acquiring an information acquisition page through a data channel established with a telephone agent system and acquiring information by means of the information acquisition page. The embodiment thus solves the problem of related technologies in which more user input operations are required for making a satisfaction survey by means of a text message and which is unable to obtain a satisfaction survey result from a user terminal in case of a format input error of the text message thus causing the whole process being inefficient in terms of information acquisition. The embodiment achieves the effect that the telephone agent system may acquire feedback information as long as a user performs a simple operation on the information acquisition page.

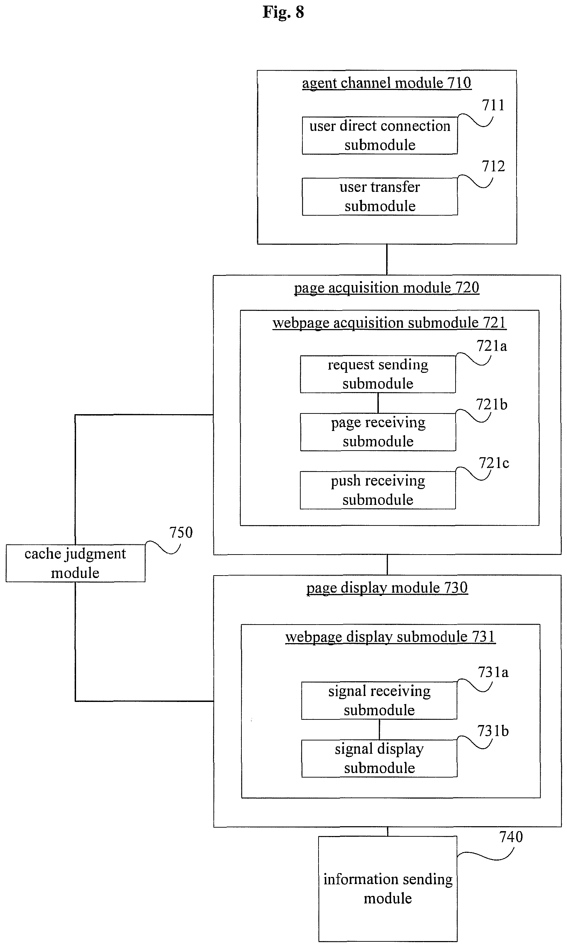

Fig. 8 is a block diagram illustrating an information acquisition device according to another exemplary embodiment; the information acquisition device may be implemented in or as the user terminal 110 in the implementation environment as shown in Fig. 1 in part or in whole by means of software or hardware or combination of both. The information acquisition device may include: an agent channel module 710, a page acquisition module 720, a page display module 730 and an information sending module 740.

The agent channel module 710 is configured to establish a data channel with a telephone agent system when conducting a voice call with the telephone agent system.

The page acquisition module 720 is configured to acquire an information acquisition page provided by the telephone agent system through the data channel.

The page display module 730 is configured to display the information acquisition page.

The information sending module 740 is configured to send feedback information to the telephone agent system through the data channel at the time of receiving the feedback information on the information acquisition page.

In a particular embodiment, the page acquisition module 720 includes:
a webpage acquisition submodule 721, configured to acquire an information acquisition page provided by the telephone agent system in the form of a webpage through the data channel.

In a particular embodiment, the webpage acquisition submodule 721 includes a request sending submodule 721a and a page receiving submodule 721b, and/or a push receiving submodule 721c;
the request sending submodule 721a is configured to send a page acquisition request to the telephone agent system through the data channel;
the page receiving submodule 721b is configured to receive the information acquisition page in the form of a webpage fed back by the telephone agent system according to the page acquisition request; and
the push receiving submodule 721c is configured to receive the information acquisition page in the form of a webpage pushed by the telephone agent system through the data channel.

In a particular embodiment, the information acquisition page includes one or more pages organized according to a tree menu structure.

In a particular embodiment, the page display module 730 includes:
a webpage display submodule 731, configured to load and display the information acquisition page in the form of a webpage on a call interface for conducting a voice call with the telephone agent system.

In a particular embodiment, the webpage display submodule 731 includes:
a signal receiving submodule 731a, configured to receive a display control signal triggered by a user, and/or receive a display control signal sent by the telephone agent system; and
a signal display submodule 731b, configured to display the information acquisition page on the call interface according to the display control signal.

In a particular embodiment, the device further includes: a cache judgment module 750, configured to judge whether the information acquisition page of the latest version corresponding to the telephone agent system is cached;
a page acquisition module 720, configured to acquire an information acquisition page provided by the telephone agent system through the data channel if the information acquisition page is not cached; and
a page display module 730, configured to display the information acquisition page if the information acquisition page is cached.

In a particular embodiment, the agent channel module 710 includes a user direct connection submodule 711, or a user transfer submodule 712;
the user direct connection submodule 711 is configured to directly establish the data channel with the telephone agent system; and
the user transfer submodule 712 is configured to establish the data channel between a local terminal (i.e. the user's terminal) and the telephone agent system by means of a third-party service platform.

In conclusion, the information acquisition device provided by the embodiment is implemented by acquiring an information acquisition page through a data channel established with a telephone agent system and acquiring information by means of the information acquisition page. The embodiment thus solves the problem of related technologies in which more user input operations are required for making a satisfaction survey by means of a text message and which is unable to obtain a satisfaction survey result from a user terminal in case of a format input error of the text message thus causing the whole process being inefficient in terms of information acquisition. The embodiment achieves the effect that the telephone agent system may acquire feedback information as long as a user performs a simple operation on the information acquisition page.

It should be additionally explained that the information acquisition device provided by the embodiment is implemented by two display control methods including triggering a display control signal by a user and sending a display control signal by the telephone agent system, thus increasing diversity of display control methods and achieving the effect of reducing user operation when the user terminal is displayed according to a display control signal sent by the telephone agent system.

It should be additionally explained that the information acquisition device provided by the embodiment is implemented by organizing an information acquisition page according to a tree menu structure, thus the telephone agent system may quickly acquire information as long as a user clicks a corresponding button, achieving the effect of improving the information acquisition efficiency.

It should be additionally explained that the information acquisition device provided by the embodiment is implemented by judging whether the information acquisition page of the latest version is cached at a user terminal and directly displaying the information acquisition page of the latest version if the information acquisition page of the latest version is cached at the user terminal, thus achieving the effect of reducing waste of communication resource and improving the information acquisition efficiency.

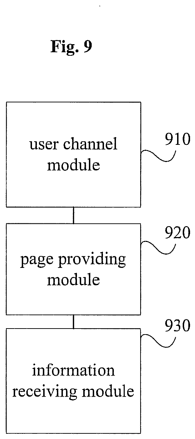

Fig. 9 is a block diagram illustrating an information acquisition device according to another exemplary embodiment. The information acquisition device may be implemented in or as the telephone agent system 120 in the implementation environment as shown in Fig. 1 in part or in whole by means of software or hardware or combination of both. The information acquisition device may include: a user channel module 910, a page providing module 920 and an information receiving module 930.

The user channel module 910 is configured to establish a data channel with a user terminal when conducting a voice call with the user terminal;
the page providing module 920 is configured to provide the user terminal with an information acquisition page through the data channel, the user terminal being configured to display the information acquisition page and receive feedback information on the information acquisition page; and
the information receiving module 930 is configured to receive the feedback information sent by the user terminal through the data channel.

In conclusion, the information acquisition device provided by the embodiment is implemented by providing a user terminal with an information acquisition page through a data channel established with the user terminal and making a satisfaction survey by means of the information acquisition page. The embodiment thus solves the problem of related technologies in which more user input operations are required for making a satisfaction survey by means of a text message and which is unable to obtain a satisfaction survey result from a user terminal in case of a format input error of the text message thus causing the whole process being inefficient in terms of information acquisition. The embodiment achieves the effect that the telephone agent system may acquire feedback information as long as a user performs a simple operation on the information acquisition page.

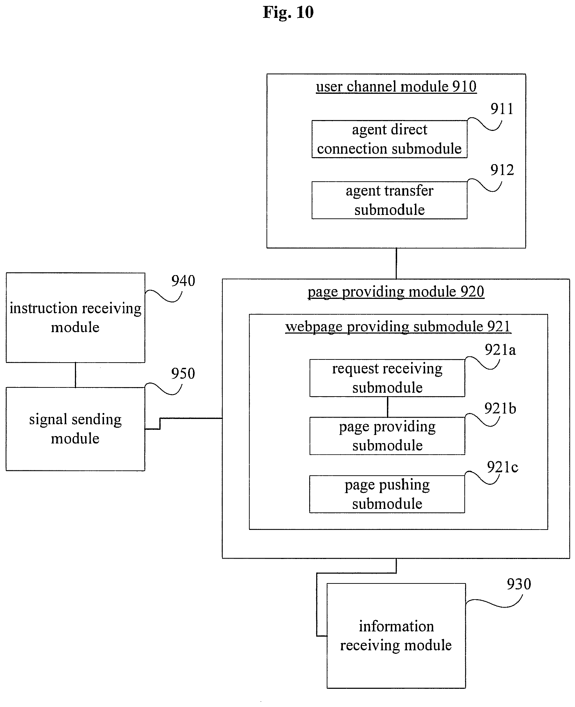

Fig. 10 is a block diagram illustrating an information acquisition device according to another exemplary embodiment; the information acquisition device may be implemented in or as the telephone agent system 120 in the implementation environment as shown in Fig. 1 in part or in whole by means of software or hardware or combination of both. The information acquisition device may include: a user channel module 910, a page providing module 920 and an information receiving module 930.

The user channel module 910 is configured to establish a data channel with a user terminal when conducting a voice call with the user terminal;
the page providing module 920 is configured to provide the user terminal with an information acquisition page through the data channel, the user terminal being configured to display the information acquisition page and receive feedback information on the information acquisition page; and
the information receiving module 930 is configured to receive the feedback information sent by the user terminal through the data channel.

In a particular embodiment, the page providing module 920 includes:
a webpage providing submodule 921, configured to provide the user terminal with an information acquisition page in the form of a webpage through the data channel.

In a particular embodiment, the webpage providing submodule 921 includes a request receiving submodule 921a and a page providing submodule 921b, and/or a page pushing submodule 921c;
the request receiving submodule 921a is configured to receive a page acquisition request sent by the user terminal through the data channel;
the page providing submodule 921b is configured to provide the user terminal with the information acquisition page in the form of a webpage according to the page acquisition request; and
the page pushing submodule 921c is configured to push the information acquisition page in the form of a webpage to the user terminal through the data channel.

In a particular embodiment, the information acquisition page includes one or more pages organized according to a tree menu structure.

In a particular embodiment, the device further includes:
an instruction receiving module 940, configured to receive a display control instruction; and
a signal sending module 950, configured to send a display control signal to the user terminal according to the display control instruction, the user terminal being configured to display the information acquisition page on a call interface according to the display control signal.

In a particular embodiment, the user channel module 910 includes an agent direct connection submodule 911, or an agent transfer submodule 912;
the agent direct connection submodule 911 is configured to directly establish the data channel with the user terminal; and
the agent transfer submodule 912 is configured to establish the data channel between a local terminal (i.e. the telephone agent system) and the user terminal by means of a third-party service platform.

In conclusion, the information acquisition device provided by the embodiment is implemented by providing a user terminal with an information acquisition page through a data channel established with the user terminal and making a satisfaction survey by means of the information acquisition page. The embodiment thus solves the problem of related technologies in which more user input operations are required for making a satisfaction survey by means of a text message and which is unable to obtain a satisfaction survey result from a user terminal in case of a format input error of the text message thus causing the whole process being inefficient in terms of information acquisition. The embodiment achieves the effect that the telephone agent system may acquire feedback information as long as a user performs a simple operation on the information acquisition page.

It should be additionally explained that the information acquisition device provided by the embodiment is implemented by two display control methods including triggering a display control signal by a user and sending a display control signal by the telephone agent system, thus increasing diversity of display control methods and achieving the effect of reducing user operation when the user terminal is displayed according to a display control signal sent by the telephone agent system.

It should be additionally explained that the information acquisition device provided by the embodiment is implemented by organizing an information acquisition page according to a tree menu structure, thus the telephone agent system may quickly acquire information as long as a user clicks a corresponding button, achieving the effect of improving the information acquisition efficiency.

It should be additionally explained that the information acquisition device provided by the embodiment is implemented by judging whether the information acquisition page of the latest version is cached at a user terminal and directly displaying the information acquisition page of the latest version if the information acquisition page of the latest version is cached at the user terminal, thus achieving the effect of reducing waste of communication resource and improving the information acquisition efficiency.

With regard to the device in the above embodiments, detailed description of specific modes for conducting operation of respective modules has been made in the embodiments related to the method, thus no detailed illustration will be made herein.

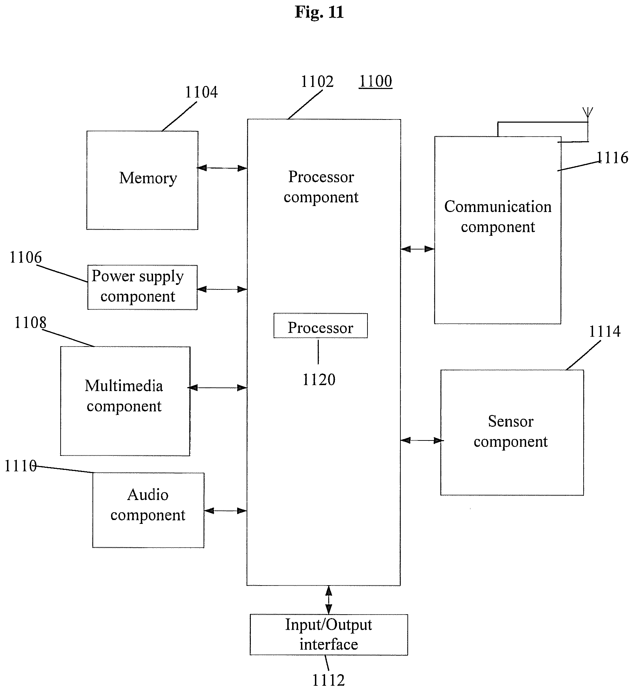

Fig. 11 is a block diagram illustrating a device 1100 serving as a user terminal in an information acquisition method according to an exemplary embodiment. For example, the device 1100 may be a mobile telephone, a computer, a digital broadcasting terminal, a message transceiver device, a game console, a tablet device, a medical device, a fitness facility, a PDA (personal digital assistant) and the like.

Referring to Fig.11, the device 1100 may include one or a plurality of components as below: a processor component 1102, a memory 1104, a power supply component 1106, a multimedia component 1108, an audio component 1110, an input/output (I/O) interface 1112, a sensor component 1114 and a communication component 1116.

The processor component 1102 generally controls the overall operation of the device 1100, such as display, telephone call, data communication, and operation associated with camera operation and record operation. The processor component 1102 may include one or a plurality of processors 1120 for executing instructions so as to complete steps of above method in part or in whole. In addition, the processor component 1102 may include one or a plurality of modules for purpose of interaction between the processor component 1102 and other components. For example, the processor component 1102 may include a multimedia module for purpose of interaction between the multimedia component 1108 and the processor component 1102.

The memory 1104 is configured to store various types of data so as to support the operation of the device 1100. Examples of the data include any application program or approach for operation on the device 1100, including contact data, phonebook data, message, picture and video, etc. The memory 1104 may be implemented by any type of volatile or non-volatile memory device or combination thereof, such as static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1106 supplies power for various components of the device 1100. The power supply component 1106 may include a power management system, one or a plurality of power supplies, and other components associated with generation, management and distribution of power for the device 1100.

The multimedia component 1108 includes a screen between the device 1100 and a user for providing an output interface. In some embodiments, the screen may include an LCD (Liquid Crystal Display) and a touch panel (TP). If the screen includes a touch panel, the screen may be implemented as a touch screen for receiving input signal from users. The touch panel includes one or a plurality of touch sensors for sensing of touching, sliding and gestures on the touch panel. The touch sensor not only can sensor trip boundary of touching or sliding, but also can detect the duration and pressure related to the touching or sliding operation. In some embodiments, the multimedia component 1108 includes a front-facing camera and/or a rear-facing camera. When the device 1100 is under an operation mode, such as capture mode or video mode, the front-facing camera and/or the rear-facing camera may receive external multimedia data. Each of front-facing camera and rear-facing camera may be a fixed optical lens system or may have focal length and optical zoom capacity.

The audio component 1110 is configured to output and/or input audio signal. For example, the audio component 1110 includes a microphone (MIC); when the device 1100 is under an operation mode such as call mode, record mode and speech recognition mode, the microphone is configured to receive external audio signal. The audio signal received may be further stored in the memory 1104 or sent out by the communication component 1116. In some embodiments, the audio component 1110 also includes a loudspeaker for outputting audio signal.

The I/O interface 1112 provides interface between the processor component 1102 and peripheral interface modules, the peripheral interface modules may be a keyboard, a click wheel or buttons, etc. These buttons may include but not limited to: home button, volume button, start button and locking button.

The sensor component 1114 includes one or a plurality of sensors for providing the device 1100 with state evaluation from all aspects. For example, the sensor component 1114 may detect the on/off state of the device 1100, relative positioning of components, for example, the components include the displayer and keypads of the device 1100; the sensor component 1114 also may also detect the position change of the device 1100 or a component thereof, the presence or absence of users' touch on the device 1100, the direction or acceleration/deceleration of the device 1100, and temperature variation of the device 1100. The sensor component 1114 may also include a proximity detector, which is configured to detect the presence of nearby objects without physical touch. The sensor component 1114 may also include an optical sensor, such as CMOS or CCD image sensor for imaging application. In some embodiments, the sensor component 1114 may also include an acceleration sensor, a gyro sensor, a magnetic sensor, a pressure sensor, or a temperature sensor.

The communication component 1116 is configured to facilitate wired communication or wireless communication between the device 1100 and other equipment. The device 1100 is available for access to wireless network based on communication standards, such as WiFi, 2G or 3G, or combination thereof. In an exemplary embodiment, the communication component 1116 receives by means of a broadcast channel the broadcast signal or broadcast-related information from external broadcast management systems. In an exemplary embodiment, the communication component 1116 also includes a near field communication (NFC) module for promoting short-range communication. For example, the NFC module may be implemented on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1100 may be implemented by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 1104 including instructions, which may be executed by the processors 1120 of the device 1100 so as to implement the above methods. For example, the non-transitory computer-readable storage medium may be ROM, random access memory (RAM), CD-ROM, a magnetic tape, a floppy disk and an optical data storage device, etc.

A non-transitory computer-readable storage medium, wherein when instructions in the storage medium are executed by processors of the device 1100, the device 1100 may execute the information acquisition method provided by any one of above embodiments.

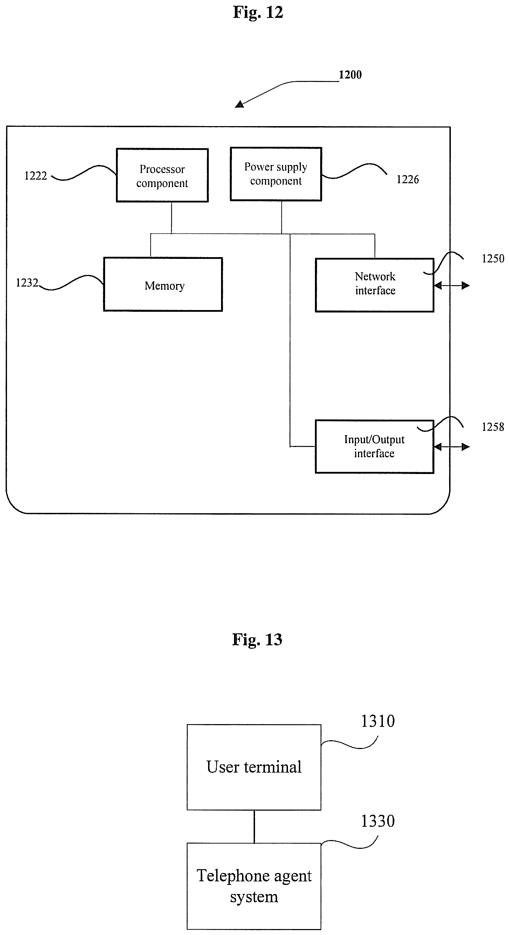

Fig. 12 is a block diagram illustrating an information acquisition device 1200 according to an exemplary embodiment. For example, the device 1200 may be provided as a telephone agent system or a third-party service platform. Referring to Fig.12, the device 1200 includes a processor component 1222, which further includes one or a plurality of processors, and memory resource represented by the memory 1232 and configured to store instructions, such as application program, that may be executed by the processor component 1222. The application program stored in the memory 1232 may include one or a plurality of modules, each of which corresponds to a set of instructions. In addition, the processor component 1222 is configured to execute instructions so as to execute the information acquisition method provided by any one of above embodiments.

The device 1200 may also include a power supply module 1226 configured to execute the power management of the device 1200, a wired or wireless network interface 1250 configured to connect the device 1200 to the network, and an input/output (I/O) interface 1258. The device 1200 can operate an operating system based on and stored in the memory 1232, such as Windows ServerTM, Mac OS XTM, UnixTM, LinuxTM, FreeBSDTM or other similar operating systems.

Fig. 13 is a schematic diagram illustrating an information acquisition system according to embodiment. The system includes: a user terminal 1310 and a telephone agent system 1330.

The user terminal 1310 includes any one of devices as shown in Fig. 7, Fig. 8 and Fig. 11.

The telephone agent system 1330 includes any one of devices as shown in Fig. 9, Fig. 10 and Fig. 12.

## Claims

1. An information acquisition method applied in a user terminal (110), said method comprising:
establishing (401,501,601) a data channel with a telephone agent system (120) when a voice call is conducted with the telephone agent system;
judging (402,502,602), based on version information received from the telephone agent system through the data channel, whether a latest version of an information acquisition page corresponding to the telephone agent system (120) is cached;
if the latest version of the information acquisition page is not cached, acquiring (402,502,602) an information acquisition page provided from the telephone agent system through the data channel and displaying (404, 504, 604) said acquired information acquisition page;
if the latest version of the information acquisition page is cached, displaying (,404,504,604) the cached information acquisition page; and
sending (405,505,605) feedback information to the telephone agent system through the data channel when the feedback information is received on the information acquisition page,
wherein said displaying the acquired information acquisition page and said displaying the cached information acquisition page comprise loading and displaying the information acquisition page in the form of webpage on a call interface for conducting the voice call with the telephone agent system,
wherein said loading and displaying the information acquisition page in the form of webpage comprises:
- receiving a display control signal from the telephone agent system through the data channel; and
- displaying the information acquisition page on the call interface according to the display control signal.

2. The method according to claim 1, wherein acquiring the information acquisition page provided in a form of webpage from the telephone agent system (120) through the data channel comprises:
sending a page acquisition request to the telephone agent system (120) through the data channel; receiving the information acquisition page in the form of webpage fed back from the telephone agent system according to the page acquisition request;
and/or
receiving the information acquisition page in the form of webpage pushed from the telephone agent system (120) through the data channel.

3. The method according to claim 1 or 2, wherein the information acquisition page comprises one or more pages organized according to a tree menu structure.

4. The method according to any one of claims 1 to 3, wherein establishing a data channel with the telephone agent system comprises:
directly establishing the data channel with the telephone agent system;
or
establishing the data channel between a local terminal and the telephone agent system (120) by means of a third-party service platform (130).

5. A user terminal (110) comprising:
an agent channel module (710) configured to establish a data channel with a telephone agent system (120) when a voice call is conducted with the telephone agent system;
a cache judgement module (450) configured to judge, based on version information received from the telephone agent system through the data channel, whether a latest version of the information acquisition page corresponding to the telephone agent system (120) is cached;
a page acquisition module (720) configured, if the latest version of the information acquisition page is not cached, to acquire an information acquisition page provided from the telephone agent system through the data channel;
a page display module (730) configured to display the information acquisition page provided from the telephone agent system if the latest version of the information acquisition page is not cached, and to display the cached information acquisition page if said cached information acquisition page if of the latest version ; and
an information sending module (740), configured to send feedback information to the telephone agent system through the data channel when the feedback information is received on the information acquisition page;
wherein said page display module (730) is configured to load and display the information acquisition page in the form of webpage on a call interface for conducting the voice call with the telephone agent system,
wherein said page display module (730) is configured load and display the information acquisition page in the form of webpage by:
- receiving a display control signal from the telephone agent system through the data channel; and
- displaying the information acquisition page on the call interface according to the display control signal

6. A computer program which, when being executed on a processor of an apparatus (110,120), performs a method according to any one of claims 1 to 4.

## Patentansprüche

1. Informationserfassungsverfahren, das in einem Benutzerendgerät (110) angewendet wird, wobei das Verfahren umfasst:
Aufbauen (401,501,601) eines Datenkanals mit einem Telefonagenten-System (120), wenn ein Sprachanruf mit dem Telefonagenten-System geführt wird,
Beurteilen (402, 502, 602) auf der Grundlage von Versionsinformationen, die von dem Telefonagenten-System über den Datenkanal empfangen werden, ob eine dem Telefonagenten-System (120) entsprechende neueste Version einer Informationserfassungsseite zwischengespeichert ist,
wenn die neueste Version der Informationserfassungsseite nicht zwischengespeichert ist, Erlangen (402, 502, 602) einer Informationserfassungsseite, die vom Telefonagenten-System über den Datenkanal bereitgestellt wird, und Anzeigen (404, 504, 604) dieser erlangten Informationserfassungsseite,
wenn die neueste Version der Seite zur Informationsbeschaffung zwischengespeichert ist, Anzeigen (404, 504, 604) der zwischengespeicherten Informationserfassungsseite und
Senden (405, 505, 605) von Rückmeldeinformationen an das Telefonagenten-System über den Datenkanal, wenn die Rückmeldeinformationen auf der Informationserfassungsseite empfangen werden,
wobei das Anzeigen der erlangten Informationserfassungsseite und das Anzeigen der zwischengespeicherten Informationserfassungsseite das Laden und Anzeigen der Informationserfassungsseite in Form einer Webseite auf einer Anrufschnittstelle zur Durchführung des Sprachanrufs mit dem Telefonagenten-System umfasst,
wobei das Laden und Anzeigen der Informationserfassungsseite in Form einer Webseite umfasst:
- Empfangen eines Anzeigesteuersignals von dem Telefonagenten-System über den Datenkanal und
- Anzeigen der Informationserfassungsseite auf der Anrufschnittstelle entsprechend dem Anzeigesteuersignal.

2. Verfahren nach Anspruch 1, wobei das Erlangen der in Form einer Webseite bereitgestellten Informationserfassungsseite von dem Telefonagenten-System (120) über den Datenkanal umfasst:
Senden einer Seitenerlangungsanforderung an das Telefonagenten-System (120) über den Datenkanal, Empfangen der Informationserfassungsseite in Form einer vom Telefonagenten-System entsprechend der Seitenerlangungsanforderung zurückgesandten Webseite
und/oder
Empfangen der Informationserfassungsseite in Form einer Webseite, die vom Telefonagenten-System (120) durch den Datenkanal gepusht wird.

3. Verfahren nach Anspruch 1 oder 2, wobei die Informationserfassungsseite eine oder mehrere Seiten umfasst, die gemäß einer Baummenüstruktur organisiert sind.

4. Verfahren nach einem der Ansprüche 1 bis 3, wobei das Aufbauen eines Datenkanals mit dem Telefonagenten-System umfasst:
direktes Aufbauen des Datenkanals mit dem Telefonagenten-System
oder
Aufbauen des Datenkanals zwischen einem lokalen Endgerät und dem Telefonagenten-System (120) mit Hilfe einer Dienstleistungsplattform (130) eines Dritten.

5. Benutzerendgerät (110), umfassend:
ein Agentenkanalmodul (710), das dazu konfiguriert ist, einen Datenkanal mit einem Telefonagenten-System (120) aufzubauen, wenn ein Sprachanruf mit dem Telefonagenten-System geführt wird,
ein Cache-Beurteilungsmodul (450), das dazu konfiguriert ist, auf der Grundlage von Versionsinformationen, die vom Telefonagenten-System über den Datenkanal empfangen werden, zu beurteilen, ob eine dem Telefonagenten-System (120) entsprechende neueste Version der Informationserfassungsseite zwischengespeichert ist,
ein Seitenerlangungsmodul (720), das dazu konfiguriert ist, dass wenn die neueste Version der Informationserfassungsseite nicht zwischengespeichert ist, eine Informationserfassungsseite, die vom Telefonagenten-System über den Datenkanal bereitgestellt wird, zu erlangen,
ein Seitenanzeigemodul (730), das dazu konfiguriert ist, die von dem Telefonagenten-System bereitgestellte Informationserfassungsseite anzuzeigen, wenn die letzte Version der Informationserfassungsseite nicht zwischengespeichert ist, und die zwischengespeicherte Informationserfassungsseite anzuzeigen, wenn es sich bei der zwischengespeicherten Informationserfassungsseite um die neueste Version handelt, und
ein Informationssendemodul (740), das dazu konfiguriert ist, Rückmeldeinformationen über den Datenkanal an das Telefonagenten-System zu senden, wenn die Rückmeldeinformationen auf der Informationserfassungsseite empfangen werden,
wobei das Seitenanzeigemodul (730) dazu konfiguriert ist, die Informationserfassungsseite zu laden und in Form einer Webseite auf einer Anrufschnittstelle zum Durchführen des Sprachanrufs mit dem Telefonagenten-System anzuzeigen,
wobei das Seitenanzeigemodul (730) dazu konfiguriert ist, die Informationserfassungsseite zu laden und in Form einer Webseite anzuzeigen durch:
- Empfangen eines Anzeigesteuersignals von dem Telefonagenten-System über den Datenkanal und
- Anzeigen der Informationserfassungsseite auf der Anrufschnittstelle entsprechend dem Anzeigesteuersignal.

6. Computerprogramm, das bei der Ausführung auf einem Prozessor eines Geräts (110, 120) ein Verfahren nach einem der Ansprüche 1 bis 4 ausführt.

## Revendications

1. Procédé d'acquisition d'informations appliqué dans un terminal d'utilisateur (110), ledit procédé comprenant :
l'établissement (401, 501, 601) d'un canal de données avec un système d'agent téléphonique (120) lorsqu'un appel vocal est effectué avec le système d'agent téléphonique ;
le jugement (402, 502, 602), sur la base d'informations de version reçues à partir du système d'agent téléphonique par le biais du canal de données, si une dernière version d'une page d'acquisition d'informations correspondant au système d'agent téléphonique (120) est en cache ;
si la dernière version de la page d'acquisition d'informations n'est pas en cache, l'acquisition (402, 502, 602) d'une page d'acquisition d'informations fournie par le système d'agent téléphonique par le biais du canal de données, et l'affichage (404, 504, 604) de ladite page d'acquisition d'informations acquise ;
si la dernière version de la page d'acquisition d'informations est en cache, l'affichage (404, 504, 604) de la page d'acquisition d'informations en cache ; et
l'envoi (405, 505, 605) d'informations de rétroaction au système d'agent téléphonique par le biais du canal de données lorsque les informations de rétroaction sont reçues sur la page d'acquisition d'informations.
dans lequel ledit affichage de la page d'acquisition d'informations acquise et ledit affichage de la page d'acquisition d'informations en cache comprennent le chargement et l'affichage de la page d'acquisition d'informations sous la forme d'une page web sur une interface d'appel pour effectuer l'appel vocal avec le système d'agent téléphonique,
dans lequel lesdits chargement et affichage de la page d'acquisition d'informations sous la forme d'une page web comprennent :
- la réception d'un signal de commande d'affichage à partir du système d'agent téléphonique par le biais du canal de données ; et
- l'affichage de la page d'acquisition d'informations sur l'interface d'appel selon le signal de commande d'affichage.

2. Procédé selon la revendication 1, dans lequel l'acquisition de la page d'acquisition d'informations fournie sous forme de page web à partir du système d'agent téléphonique (120) par le biais du canal de données comprend :
l'envoi d'une demande d'acquisition de page au système d'agent téléphonique (120) par le biais du canal de données ;
la réception de la page d'acquisition d'informations sous la forme d'une page web renvoyée par le système d'agent téléphonique selon la demande d'acquisition de page ;
et/ou
la réception de la page d'acquisition d'informations sous la forme d'une page web avancée par le système d'agent téléphonique (120) par le biais du canal de données.

3. Procédé selon la revendication 1 ou 2, dans lequel la page d'acquisition d'informations comprend une ou plusieurs pages organisées selon une structure de menu en arbre.

4. Procédé selon l'une quelconque des revendications 1 à 3, dans lequel l'établissement d'un canal de données avec le système d'agent téléphonique comprend :
l'établissement direct du canal de données avec le système d'agent téléphonique ; ou
l'établissement du canal de données entre un terminal local et le système d'agent téléphonique (120) au moyen d'une plateforme de services tiers (130).

5. Terminal d'utilisateur (110) comprenant :
un module de canal d'agent (710) configuré pour établir un canal de données avec un système d'agent téléphonique (120) lorsqu'un appel vocal est effectué avec le système d'agent téléphonique ;
un module de jugement de cache (450) configuré pour juger, sur la base d'informations de version reçues à partir du système d'agent téléphonique par le biais du canal de données, si une dernière version de la page d'acquisition d'informations correspondant au système d'agent téléphonique (120) est en cache ;
un module d'acquisition de page (720) configuré, si la dernière version de la page d'acquisition d'informations n'est pas en cache, pour acquérir une page d'acquisition d'informations fournie par le système d'agent téléphonique par le biais du canal de données ;
un module d'affichage de page (730) configuré pour afficher la page d'acquisition d'informations fournie par le système d'agent téléphonique si la dernière version de la page d'acquisition d'informations n'est pas en cache, et pour afficher la page d'acquisition d'informations en cache si ladite page d'acquisition d'informations en cache est de la dernière version ; et
un module d'envoi d'informations (740), configuré pour envoyer des informations de rétroaction au système d'agent téléphonique par le biais du canal de données lorsque les informations de rétroaction sont reçues sur la page d'acquisition d'informations ;
dans lequel ledit module d'affichage de page (730) est configuré pour charger et afficher la page d'acquisition d'informations sous la forme d'une page web sur une interface d'appel pour effectuer l'appel vocal avec le système d'agent téléphonique,
dans lequel ledit module d'affichage de page (730) est configuré pour charger et afficher la page d'acquisition d'informations sous la forme d'une page web en :
- recevant un signal de commande d'affichage à partir du système d'agent téléphonique par le biais du canal de données ; et
- affichant la page d'acquisition d'informations sur l'interface d'appel selon le signal de commande d'affichage.

6. Programme informatique qui, lorsqu'il est exécuté sur un processeur d'un appareil (110, 120), effectue un procédé selon l'une quelconque des revendications 1 à 4.
